# EUROPEAN PATENT APPLICATION

(11) **EP 4 534 423 A1**
(43) Date of publication of application: **09.04.2025**
(21) Application number: 24200073.5
(22) Date of filing: 12.09.2024
(51) Int. Cl.: B65B 1/32, B65B 7/16, B65B 7/28, B65B 37/00, B65B 43/46, B65B 43/52, B65B 43/54, B65G 17/36, B65B 9/00, B65B 59/04, B65B 1/06, B65B 1/30, B65B 37/02, B65B 37/08, B65B 39/00, B65B 39/14, B65B 59/00, B65B 57/20

(54) **MACHINE AND METHOD FOR PACKAGING PRODUCTS OF THE TOBACCO INDUSTRY**

(30) Priority: 26.09.2023 IT 202300019860
(71) Applicant: Sasib S.p.A., 40013 Castel Maggiore (BO) (IT)
(72) Inventor: GHIOTTI, Roberto, Castel Maggiore (BO) (IT); MANFREDI, Enrico, Castel Maggiore (BO) (IT)
(74) Representative: Milli, Simone

(57) **Abstract**

A packaging machine (1) for products (P) of the tobacco industry, comprising:
- a main conveyor (2) which is provided with a plurality of seats (3) for housing containers (C) for products (P) and which is configured to move the housing seats (3) along a main, closed conveying path;
- a first feeding station (4) for feeding the containers (C) into the housing seats (3);
- a feeding and loading station (5) for the products (P) and configured to release the products (P) into the containers (C).

The main conveyor (2) comprises a plurality of supports (24) fixed to a movable structure (25) extending along the main, closed conveying path, comprises a movable structure 25 extending along the main, closed conveying path and a plurality of supports 24 fixed to the movable structure 25. The supports (24) comprise an opening (53) adapted to removably receive the seats (3) for housing the containers (C).

## Description

This invention relates to a machine for the packaging of products of the tobacco industry, in particular, but not limited to, the packaging of pouches of cohesionless material (e.g. what is known as "snus").

More in detail, this invention relates to a machine and a related method for packaging pouches containing cohesionless material, for example, tobacco and/or nicotine, in containers.

Hereafter in this disclosure, express reference is made to pouches of cohesionless material, but without limiting the scope of the invention, since the product of the tobacco industry may be any product that needs to be placed in a respective package.

Known in the prior art of the industry concerned are packaging machines which are generally designed to insert several pouches of cohesionless material in specific containers which are then closed and sealed to define a package which is ready for sale on the market.

One prior art solution comprises a first container feeding wheel and an upper belt configured to place the pouches in a collecting cavity located above it.

In this solution, the path followed by the container is a circular path; as the container feeding wheel rotates, the container is carried to different working stations, at different angular positions, (where, for example, the container is capped, its weight checked, etc.).

In this solution, changing over to containers of a different shape and/or size involves changing the container feeding wheel in the machine with another feeding wheel designed to handle the different container format. This operation is particularly cost intensive and, in addition to requiring the intervention of specialist personnel, is also highly time consuming. In effect, the container feeding wheel is located under the upper conveyor belt and is connected to a respective drive. Thus, removing the feeding wheel means operating on a plurality of parts.

In this industry, a need which is felt particularly strongly is that for a packaging machine which is particularly flexible with regard to the possibility of being able to handle containers of different shapes and/or sizes and, in particular, for a machine which, in the event of container changeover, does not necessitate a lengthy and complex setup procedure.

Indeed, there is a great need for a machine in which changeover can be carried out independently by the operator without the assistance of technical service personnel from the manufacturers of the machine.

This invention therefore has for an aim to meet the above-mentioned need, that is to say, to provide a packaging machine and method which can be adapted particularly quickly and easily to handling containers of a different shape and size.

Further features and advantages of the invention are more apparent from the exemplary, hence non-limiting description which follows of a preferred, but non-exclusive embodiment of a splicing apparatus as illustrated in the accompanying drawings, in which:

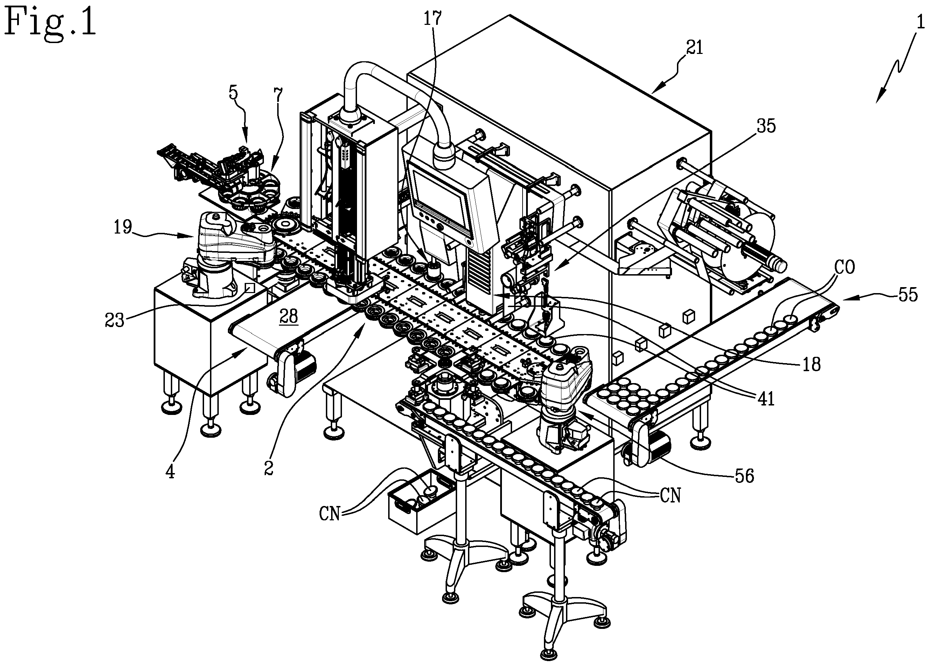

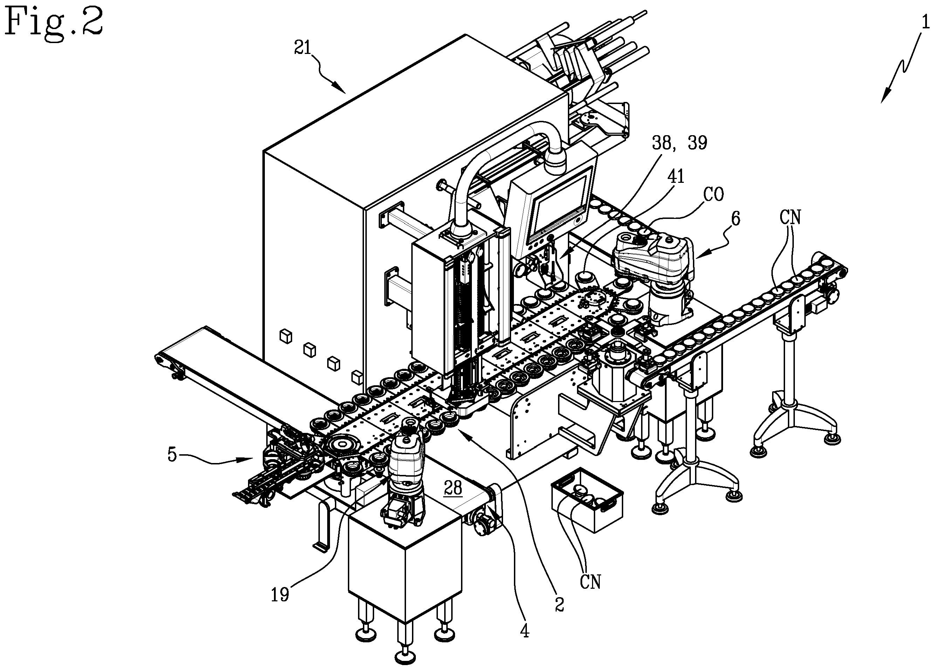

- Figures 1 and 2 show schematic perspective views of a packaging machine of the invention;
- Figure 3 is a plan view of the packaging machine of Figures 1 and 2;

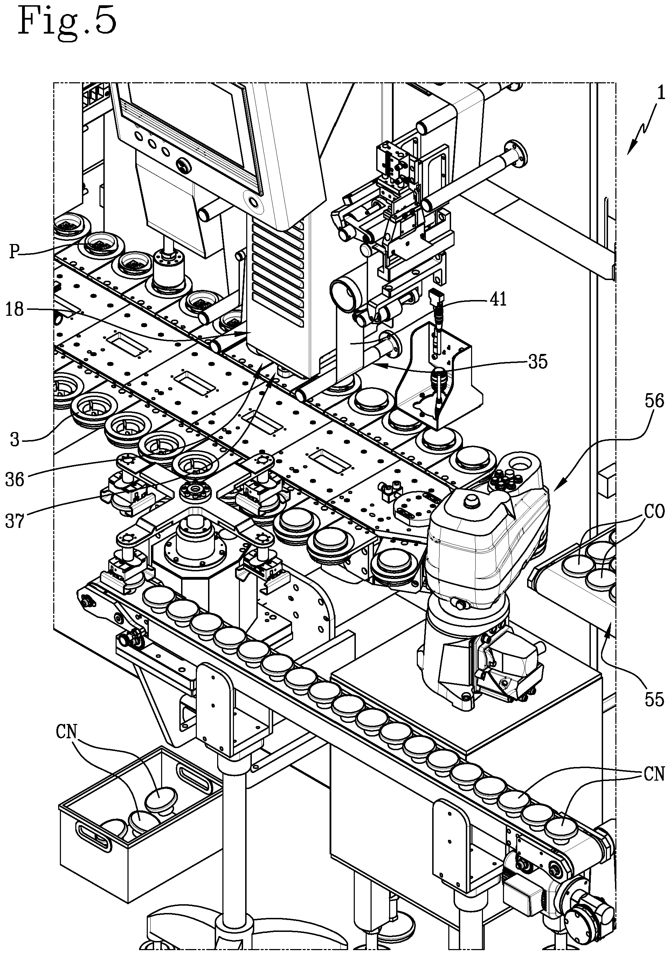

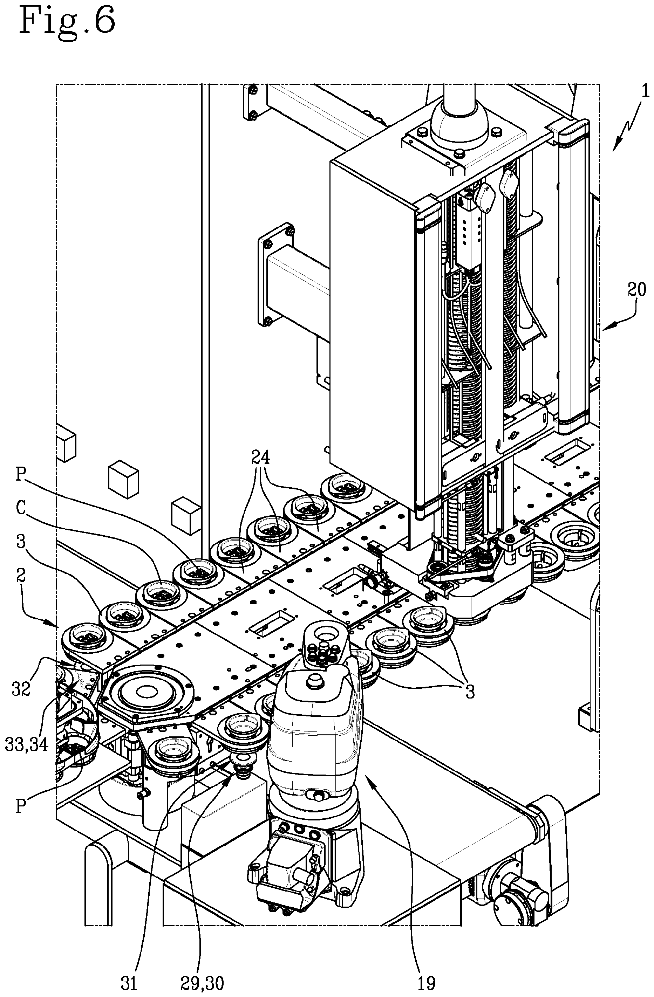

- Figures 4 to 6 show respective perspective views of details of the machine illustrated in the preceding figures;
- Figures 7A and 7B show respective perspective views of a housing seat for containers, according to a first embodiment, usable in the machine of Figures 1 to 6;
- Figure 8 shows a respective perspective view of a housing seat for containers, according to a second embodiment, usable in the machine of Figures 1 to 6;
- Figure 9 shows a package made by the machine of the invention;

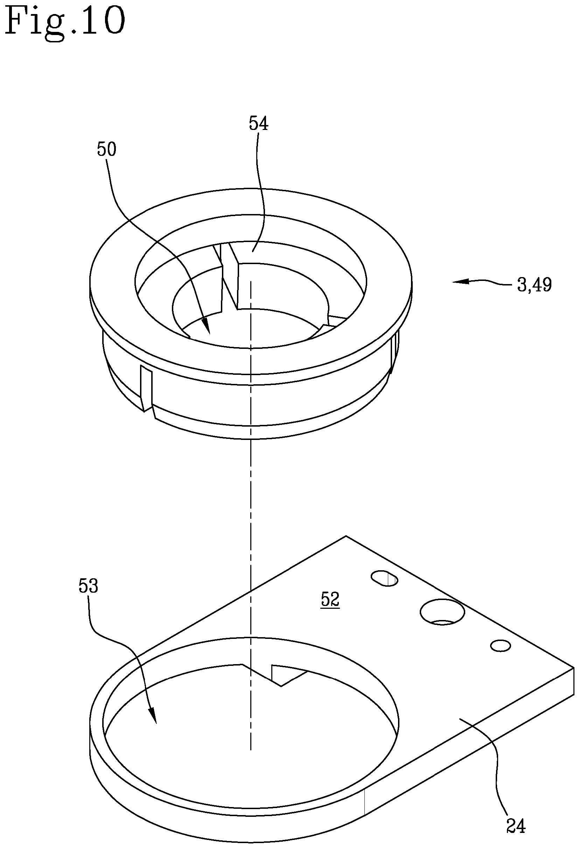

- Figure 10 shows details of the machine of Figures 1 and 2.

The reference numeral 1 denotes a packaging machine according to this invention.

It should be noted that the machine 1 is capable of packaging a wide variety of types of products of the tobacco industry. The term "to package" is used to mean placing the products P inside containers C, which are then closed by a lid CO, to define packages CN of products P of the tobacco industry.

Preferably, the products P of the tobacco industry are pouches of cohesionless material. The cohesionless material may be a tobacco- and/or nicotine-based material. In other words, the products P are preferably what are known as "snus" products.

The packaging machine 1 comprises a main conveyor 2 provided with a plurality of seats 3 for housing containers C for products P of the tobacco industry. The main conveyor 2 is configured to move the housing seats 3 along a main (preferably closed) conveying path.

Preferably, the main conveying path comprises straight and curved stretches.

Preferably, the curved stretches are circular arcs.

Preferably, the main conveying path comprises a first straight stretch, a first curved stretch, a second straight stretch and a second curved stretch.

According to another aspect, the machine 1 comprises first feeding station 4 for feeding containers C into the housing seats 3 and located along the main conveying path.

According to yet another aspect, the machine 1 comprises a feeding and loading station 5 for the products P, located along the main conveying path and configured to release the products P into the containers C. Preferably, the feeding and loading station 5 for the products P is located at the first curved stretch of the main, closed conveying path.

According to an aspect of the invention, the feeding and loading station 5 for the products P comprises:
- a rotary unit 7, provided with a plurality of radial seats 8 for receiving the products P and configured to move the radial seats 8 along a respective closed path, at least part of which covers an overlap zone 9 with the main, conveying path;
- selective opening means 10 for opening a bottom 11 of the radial seats 8 and configured to open the bottom 11 of the radial receiving seats 8 at the overlap zone 9 of the main conveying path to allow the products P to be released into the containers C.

According to an aspect, the main conveyor 2 comprises a movable structure 25 extending along the main, closed conveying path and a plurality of supports 24 fixed to the movable structure 25.

The supports 24 are adapted to removably receive the housing seats 3 for the containers C. In other words, the supports 24 comprise an opening 53 adapted to removably receive the seats 3 for housing the containers C. Basically, the housing seats 3 can be inserted into and removed from the supports 24.

The supports 24 are fixed (preferably irremovably attached) to the movable structure 25.

It should be noted that the advantage of having made the housing seats 3 so they can be (quickly and easily) removed from the supports 24 is that the machine can be readily adapted to containers C of different shapes. In particular, when the containers C in which products P have to be packaged change over to containers of a different shape and/or size, the changeover of the machine 1 can be carried out quickly and easily by the operator by simply replacing the housing seats 3. This procedure is so simple that it does not require technical service personnel from the manufacturers of the machine 1.

The changeover can be carried out extremely quickly and easily.

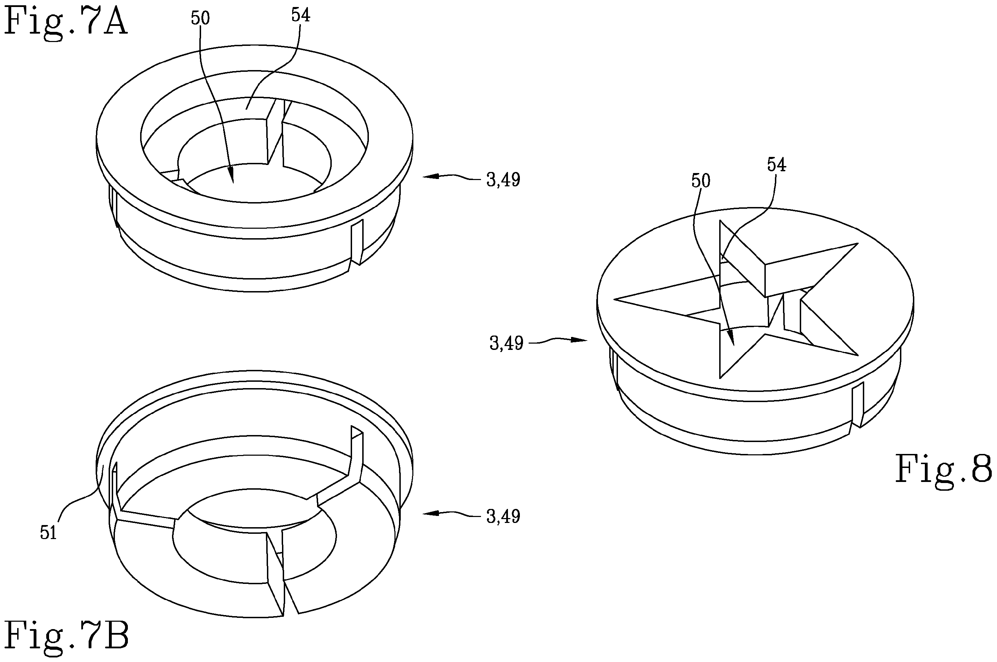

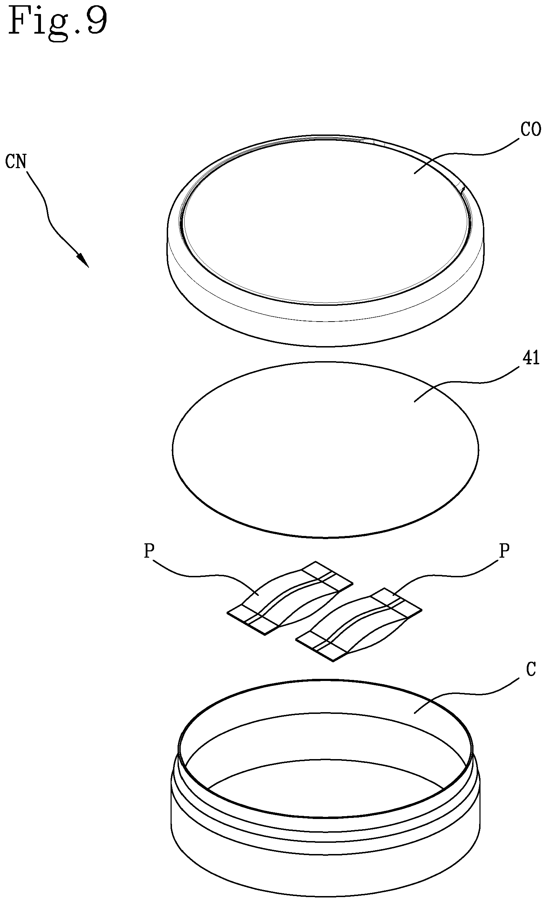

For example, in a first embodiment, the container C may be cylindrical in shape (Figure 9). In such a case, the housing seats 3 illustrated in Figures 7A and 7B would be used in the machine.

Alternatively, the containers C might be star-shaped packs. In such a case, the housing seats 3 illustrated in Figure 8 would be used in the machine 1.

Thus, supposing there is a changeover from a container C which is cylindrical to a container C which is star-shaped, the machine operator would simply need to replace the housing seats 3 without in any way worrying about the supports 24, which would remain the same. In practice, the operator would have to remove the housing seats 3 of Figures 7A and 7B from the machine and place the housing seats 3 of Figure 8 in the supports 24.

The supports 24 comprise respective openings 53 adapted to removably receive the housing seats 3.

Advantageously, thanks to the fact that the seats 3 are easy to replace, the machine 1 can be very quickly and easily modified and adapted to containers C of different formats, that is, to containers C of different shapes and sizes.

According to another aspect, the housing seats 3 are each defined by a housing body 49 in which there is an opening 50 adapted to receive the container C.

According to this aspect, each housing body 49 comprises a surface 54, inside the opening 50, for contacting and supporting the containers C.

According to another aspect, each housing seat 3 comprises an annular portion 51 radially peripheral to the housing body 49, and each support 24 comprises a wall 52 for contacting the annular portion 51 of the housing seat 3 when the housing seat 3 is being supported by the support 24.

The movable structure 25 may comprise a chain, a belt or similar device to which the supports 24 are fixed.

The conveyor 2 also comprises a plurality of rotary means (not illustrated. for example, toothed wheels or pulleys), coupled to the movable structure 25 to move it in rotation.

Preferably, the machine 1 comprises a control unit 21.

Preferably, the control unit 21 is configured to drive the conveyor 2 in steps; that is to say, the conveyor 2 does not have continuous motion but is driven in discrete steps, that is to say, with intermittent, periodic motion (whose unit of time is the step).

Preferably, according to this aspect, the stations forming part of the machine 1 are configured to operate in steps, that is to say, to perform their functions in a predetermined time interval, corresponding to the step or a fraction thereof.

It is, however, understood that the containers C, as well as the products P or the lids CO may be fed to the machine 1 with continuous motion and not in steps.

With reference in particular to the feeding of the products P to the machine 1, it is noted that the products P may come directly from a machine which produces them, that is to say, fed in directly by it (preferably, this is the preferred option when the production machine is located in proximity to the packaging machine 1) or the production machine may feed them out into specific conveyor trays which are adapted to receive a plurality of products P and which are conveyed towards the packaging machine 1 and, when they reach the packaging machine 1, feed the products P into it.

In other words, defined according to the invention is a system for the production of packages of articles, comprising a production machine and a packaging machine 1; the production and packaging machines may be connected directly to each other or they may be connected by a conveyor line for transporting the products P.

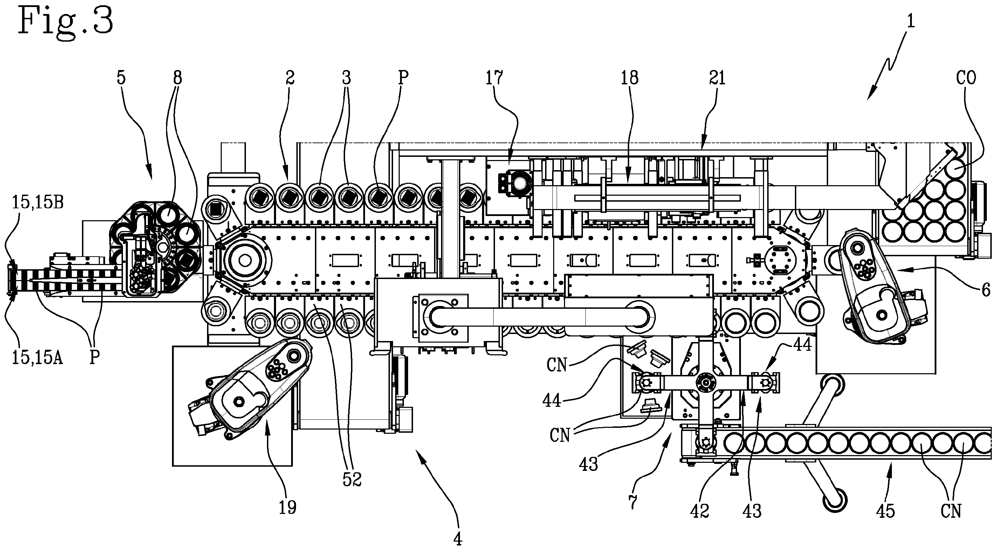

With reference in particular to Figure 3, it should be noted that the closed path followed by the radial seats 8 only partly overlaps the main, closed conveying path followed by the containers C.

Basically, the closed path of the radial seats 8 and the main, closed conveying path of the containers C only overlap at a predefined overlap zone 9.

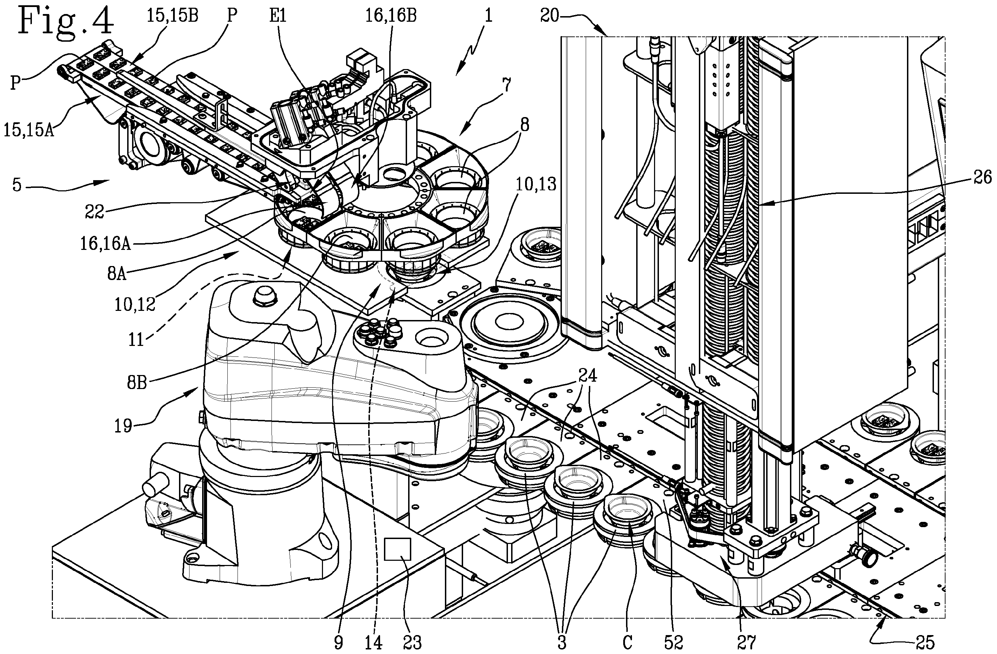

Preferably, the closed path of the radial receiving seats 8 is a circular path. According to another aspect, as clearly shown in Figure 4, the selective opening means 10 for opening a bottom 11 comprise a (closing) table 12, positioned to define a (stable) surface for closing the bottom 11 of the radial seats 8, and an opening 13 in the table 12 at the overlap zone 9 of the main, closed conveying path.

According to this aspect, the bottom 11 of each radial receiving seat 8 is closed by the closing table 12 at a position different from the release position (the overlap zone 9) where the product P is released onto the housing seat 3 under it (that is, into the underlying container C positioned in the housing seat 3), that is to say, different from the position where the opening 13 is located.

According to another aspect, the selective opening means 10 comprise at least one movable element 14, configured to selectively close/open the bottom 11.

More precisely, the selective opening means 10 comprise at least one movable element 14, configured to selectively close/open the opening 13 in the table 12.

It should be noted that the control unit 21 may advantageously be configured to be able to drive the movable element 14 to close/open the opening 13.

It should be noted that, generally speaking, according to this aspect, the control unit 21 is configured to open the opening 13 when a housing seat 3 (with a container C in it) is present under the opening 13.

It should also be noted that when the opening 13 is in the open condition, there is a radial seat 8 above the opening 13.

In other embodiments, the selective opening means 10 may be of a different kind.

For example, in another embodiment, the selective opening means 10 comprise a movable mechanism associated with each radial seat 8 and configured to be able to switch between a configuration for closing the bottom 11 and one for opening the bottom 11 of the seat 8 itself.

In this embodiment, the movable mechanism is configured to set the bottom 11 to the open configuration when the radial seat 8 is in the overlap zone 9, so that the products P can be released into the container C inside the housing seat 3.

In this embodiment, therefore, the selective opening means 10 comprise a plurality of movable elements, each associated with a radial seat 8 to selectively close or open the bottom 11 of the radial seat 8, as a function of the position of the radial seat 8.

According to another aspect, the radial seats 8 are disposed above the main, closed conveying path. In other words, the radial seats 8 are disposed above the main conveyor 2.

Preferably, the radial seats 8 have a downwardly tapered shape. Advantageously, this shape makes it easier for the products P to be transferred from the radial seats 8 to the containers C.

In other words, the bottom 11 of the radial receiving seats 8 is positioned at a height above the height at which the housing seats 3 are conveyed, so that the products can be transferred from the radial seats 8 to the housing seats 3 by gravity.

Preferably, the feed and loading station 5 for the products P comprises at least one conveyor 15 configured to convey and release the products P into at least one radial seat 8.

According to another aspect, the conveyor 15 is positioned to release the products P into at least one radial seat 8 at a releasing zone 16 different from the overlap zone 9.

Preferably, the conveyor 15 may be composed of a first conveyor 15A and a second conveyor 15B which are independent of each other (hereinafter, reference is made generically to the conveyor 15, meaning that all the features described with reference to the conveyor 15 are also applicable to the conveyors 15A, 15B).

Preferably, the control unit 21 is configured to control the conveyor 15.

Preferably, the conveyor 15 is a belt conveyor.

Preferably, the machine 1 comprises a sensor 22, associated with the conveyor 15 to count the number of products P arriving at a predetermined zone of the conveyor 15 being monitored.

The count is used by the control unit 21 to know how many products P have been inserted into each container C: in effect, depending on requirements, each container C must include a predetermined number of products P so that each package made meets production needs (e.g. weight, number of products, etc.).

In effect, it should be noted that according to this aspect, the control unit 21 is connected to the sensor 22 to receive a signal indicating the number of products P arriving in the predetermined monitored zone of the conveyor 15.

According to another aspect, the feeding and loading station 5 for the products P comprises at least one deflector 16 which is movable to direct the products P conveyed by the conveyor 15 and released into the radial receiving seats 8.

It should be noted that the feeding station 5 also comprises an actuator for driving the deflector 16. The control unit 21 is configured to control the actuator of the deflector 16.

Preferably, the feeding and loading station 6 for the products P comprises a first deflector 16A and a second deflector 16B.

The first deflector 16A is associated with the first conveyor 15A, while the second deflector 16B is associated with the second conveyor 15B.

The deflector 16 is movable between a closed position, where it is proximal to the end E1 of the conveyor 15, and an open position, where it is distal to the end E1 of the conveyor 15.

It should be noted that at the closed position, the deflector 16 allows the conveyor 15 to release the product into the radial receiving seat 8, denoted individually by the reference label 8A, under the conveyor 15, while at the open position, the deflector 15 allows the conveyor 15 to release the product into the seat which is denoted individually by the reference label 8B (the seat 8B being further away than the seat 8A mentioned previously).

It should be noted, therefore, that adjusting the position of the deflector 16 allows the products P to be unloaded into a receiving seat 8 even when the seat is at different angular positions or is in transit between a plurality of different angular positions.

Advantageously, that way, the machine 1 is not limited to unloading the products P into a receiving seat 8 only when the receiving seat 8 is at a specific position.

According to an aspect, the control unit 21 is configured to command the rotary unit 7 so that, within a predetermined time interval, it moves a plurality of radial receiving seats 8 into the overlap zone 9 and releases the products P contained therein into a container C positioned in a housing seat 3 which has, in the same time interval, been in turn positioned in the overlap zone 9 of the closed conveying path.

According to this aspect, therefore, the control unit 21 is configured to keep a housing seat 3 on standby in the overlap zone 9 during the movement of the plurality of radial receiving seats 8 which unload the products P into the housing seat 3 itself.

According to this aspect, the container C of a housing seat 3 may thus be filled with the products P contained in a plurality of radial receiving seats 8. Advantageously, this allows increasing the flexibility of the machine 1, which can fill the containers C even with a large number of products P, independently of the loading capacity of the single radial receiving seat 8. Described below is the first feeding station 4 for feeding the containers C. According to an aspect, the first feeding station 4 for feeding the containers C of products P comprises a loading robot 19, movable in space to pick up at least one container C and insert it into at least one housing seat 3.

Preferably, the loading robot 19 is a robot having a plurality of degrees of freedom in space.

According to another aspect, the machine 1 comprises an image capturing device 23 configured to capture images of the containers C and connected to the loading robot 19. The image capturing device 23 is configured to transmit images pertaining to one or more containers C positioned at the feeding station 4.

According to this aspect, the loading robot 19 is configured to orient a container C before inserting it into a respective housing seat 3. Orientation is carried out as a function of the images captured by the image capturing device 23.

Advantageously, this allows inserting a container C which is not axisymmetric in shape (see Figure 8, for example) into the housing seat 3: in effect, orienting carried out by the loading robot 19, based on the images captured, prior to insertion into the seat 3, allows orienting the container C based on the shape of the seat 3 itself.

According to another aspect, alternative to or combinable with, the previous one, the first feeding station 4 for feeding the containers C comprises an automatic loading device 20, adapted to house a plurality of containers C, located above the main, closed conveying path and configured to release a container C into an underlying housing seat 3.

The automatic loading device 20 is configured to allow housing a plurality of containers C stacked on top of one another.

More precisely, the automatic loading device 20 comprises a structure 26 for stacking the containers C and a means 27 for individually releasing one of the containers C, specifically the container C at the bottom of the stack of containers C.

The control unit 21 is configured to command the individual releasing means 27 based on the position of the housing seats 3 so as to release a container C into a housing seat 3 which is empty and is lying under the loading device 20.

According to another aspect, alternative to or combinable with, the one described previously in connection with the first feeding station 4, the first feeding station 4 for feeding the containers C, comprises a loading conveyor 28, configured to convey a plurality of containers towards the main, closed conveying path (in particular, towards a zone for loading the containers C). According to this aspect, an operator may pick up the containers C from the loading conveyor 28 and load the containers C into the housing seats 3 manually at the feeding station 4. Manual loading by an operator is particularly advantageous in the case of containers C which are fragile or breakable and which, under certain conditions, might break or be damaged if handled by an automatic loading system.

From what is described in the foregoing, it may be inferred that the machine 1 is extremely flexible: indeed, it is capable of receiving containers C via the loading robot 19, via the automatic loading device 20 or by an operator manually transferring the incoming containers C from the conveyor 28. The expressions "upstream" and "downstream" are used in this description with reference to the position of a specific station along the main, closed conveying path: it should be noted that these expressions are referred to the direction in which the containers C are conveyed by the main conveyor 2, that is say, a first station described as being upstream of a second station means that a specific container C, as it travels along the main conveying path on the main conveyor 2 meets the first station first and then the second station.

The machine 1 optionally comprises a weighing station 29 for weighing the containers C.

Preferably, the container C weighing station 29 is located downstream of the first feeding station 4 for feeding the containers C and upstream of the feeding and loading station 5 for the products P.

Preferably, the weighing station 29 comprises a sensor 30. The sensor 30 comprises a piston 31, movable between a non-working position and a working position.

It should be noted that at the working position, the piston 31 is configured to lift at least one container C from the housing seat 3, thus detaching the container C from the seat 3 so it can be weighed.

Thus, the piston 31 is located in a predetermined weighing zone of the main conveying path to intercept a container C positioned in a housing seat 3 located in said predetermined weighing zone.

Preferably, the control unit 21 is connected to the sensor 30 to detect a signal representing the weight of the container C.

The machine 1 optionally comprises a weighing station 32 for weighing the containers C which are full of products P. Preferably, the weighing station 32 for weighting the full containers C is located downstream of the feeding and loading station 5 for the products P.

Preferably, the weighing station 32 comprises a sensor 33. The sensor 33 comprises a piston 34, movable between a non-working position and a working position.

It should be noted that at the working position, the piston 34 is configured to lift at least one container C from the housing seat 3, thus detaching the container C from the seat 3 so it can be weighed.

Thus, the piston 34 is located in a predetermined zone of the main conveying path to intercept a container C positioned in a housing seat 3 located in said predetermined weighing zone.

Preferably, the control unit 21 is connected to the sensor 33 to detect a signal representing the weight of the assembly defined by the container C and products P contained therein.

It should be noted that the control unit 21 may be configured to derive the weight of the products P inside a container C by combining the signal of the sensor 33 with that of the sensor 30 (arithmetic difference).

According to another aspect, the packaging machine 1 comprises a humidifying station 17 for humidifying the products P and located along the main, closed conveying path downstream of the feeding and loading station 5 for the products P.

The humidifying station 17 preferably comprises a nozzle or a nebulizer for spraying a liquid (preferably water or a water-based mixture) on the products P inside the container C.

According to another aspect, the machine 1 comprises an applicator station 18 for applying a sealing sheet 41 to the container C filled with products P. The applicator station 18 for applying a sheet 41 is located along the main, closed conveying path downstream of the feeding and loading station 5 for the products P.

Preferably, the applicator station 18 for applying a sealing sheet 41 comprises feeding means 35 for feeding the sealing sheet 41. The feeding means 35 for feeding the sealing sheet 41 preferably comprise a plurality of idle and/or entraining rollers.

Preferably, the feeding means 35 for feeding the sealing sheet 41 comprises a feed roll of sealing sheet 41.

Preferably, the applicator station 18 for applying a sealing sheet 41 comprises cutting means 36 for cutting the sealing sheet 41, configured to cut a portion of the sealing sheet 41 to the size of the container C, and welding means 37 for welding the cut portion of the sealing sheet 41 onto the container C.

Preferably, the sealing sheet 41 is made of a thermoplastic material or of a metallic material and/or a combination of these materials.

According to another aspect, the machine 1 may comprise one or more quality control stations 38 for controlling the quality of the package CN. The quality control station 38 is located preferably downstream of the feeding and loading station 5 for the products P.

Preferably, the quality control station 38 comprises at least one sensor 39, configured to detect at least one package quality parameter in a predetermined zone of the main conveying path.

Preferably, the sensor 39 is defined by an image capturing device (a camera, for example) configured to capture at least one image of the package CN, that is to say, of the container C and/or of the respective products P therein and/or of the lid CO in a predetermined zone. Preferably, the control unit 21 is connected to the sensor 39, to receive the at least one quality parameter of the package CN from the sensor 39.

The control unit 21 is also configured to classify the packages CN as a function of the quality parameter detected by the sensor 39. More precisely, the control unit 21 is also configured to identify the packages CN having a quality defect, as a function of the quality parameter detected by the sensor 39.

The packages CN identified as having a quality defect will subsequently be discarded (preferably at the releasing station 7 for the packages CN, which is described below).

According to another aspect, the packaging machine 1 comprises an applicator station 6 for applying lids CO to the containers C which have been filled with products P to form packages CN of products P.

It should be noted that the applicator station 6 for applying lids CO is located downstream of the feeding and loading station 5 for the products P.

Still more preferably, the applicator station 6 for applying lids CO is located after the applicator station 18 for applying a sealing sheet 41 to the container C filled with products P.

Preferably, the applicator station 6 for applying lids CO comprises a conveyor 55 for conveying the lids CO. The conveyor 55 is preferably a belt conveyor.

Preferably, also, the applicator station 6 for applying lids CO comprises a robot 56 for picking up the lids CO from the conveyor 55.

The pickup robot 56 is configured to place the lids CO on the containers C positioned at the applicator station 6 for applying lids CO.

Preferably, the machine 1 comprises a releasing station 7 for the packages CN which transfers the packages CN out of the closed conveying path. The releasing station 7 for the packages CN is the last station on the main, closed conveying path.

Preferably, the releasing station 7 comprises a rotary unit 42.

Preferably, the rotary unit 42 comprises a plurality of arms 43, provided with respective gripping means 44 for gripping the packages.

The gripping means 44 for gripping the packages CN may, for example, comprise suction devices such as suction cups, for example.

The rotary unit 42 is configured to pick up the packages CN from the housing seats 3 of the main conveyor 2.

More precisely, the arms 43 pick up the packages CN from the housing seats 3 of the main conveyor 2.

The releasing station 7 for the packages CN preferably comprises a conveyor 45 configured to receive the packages CN from the rotary unit 42 (more precisely, from the arms 43).

It should be noted that there are preferably two paths out of the releasing station 7: one path (via the conveyor 45) for the packages CN which are free of defects and another path or the packages CN which have been identified as being defective.

Also defined according to another aspect of this disclosure is a method for packaging products P of the tobacco industry, comprising the following steps:
- providing a plurality of housing seats 3 for containers C adapted to contain products P of the tobacco industry;
- moving the housing seats 3 for containers C along a main, closed conveying path (preferably via a main conveyor 2);
- feeding a container C into one of the housing seats 3;
- releasing at least one product P into the container C positioned in the housing seat 3.

According to an aspect of this disclosure, the method further comprises a step of providing a rotary unit 7 equipped with a plurality of radial receiving seats 8 for products P and the step of releasing at least one product P into the container C positioned in the housing seat 3 comprises the following steps:
- placing at least one product P in a radial receiving seat 8 for products P;
- moving the radial receiving seat 8 along a respective closed path, at least part of which covers an overlap zone 9 with the main, closed conveying path;
- positioning at least one housing seat 3, with the container C inside it, at the overlap zone 9;
- opening a bottom 11 of the radial receiving seat 8, having at least one product P inside it, at the overlap zone 9, so as to release the at least one product P into the container C carried by the housing seat 3 positioned in the overlap zone 9.

According to another aspect, the method comprises a step of providing a table 12 defining a surface for closing the bottom 11 of the radial receiving seats 8 and an opening 13 located at the overlap zone 9, and:
- before the step of placing at least one product P in a radial receiving seat 8 for products P, the method comprises a step of closing the bottom 11 of the radial receiving seat 8 by means of the table 12;
- and the step of opening a bottom 11 of the radial receiving seat 8 comprises positioning the radial receiving seat 8 at the opening 13 in the table 12 so as to make the at least one product P inside the radial receiving seat 8 pass through the opening 13 in the table 12.

According to yet another aspect, the step of releasing the products P into the housing seat 3 positioned in the overlap zone 9 of the main, closed conveying path comprises a step of making the opening 13 accessible for transit (that is, opening it).

It should be noted that the method and the machine 1 of the invention are particularly simple and flexible.

The particular configuration of the feeding and loading station 5 for the products P, combined with the structure of the main conveyor 2 makes it possible to ensure being able to fill containers C of a wide variety of shapes and sizes. They also allow using a plurality of stations, exceeding the limits of the prior art.

According to another aspect, the method comprises the following steps:
- providing a main conveyor 2 which comprises a movable structure 25 extending along the main, closed conveying path and a plurality of supports 24, each provided with a respective opening 53 adapted to removably receive the housing seats 3;
- removably inserting each housing seat 3 into the opening 53 of a respective support 24 so as to couple each housing seat 3 to a support 24;
- moving the housing seats 3, coupled to the supports 24, along the main, closed conveying path.

It should be noted that, advantageously, according to this aspect, it is possible to make packages CN with containers C of any shape and size by simply changing the housing seats 3 quickly and easily: the fact that the housing seats 3 are, in effect, inserted removably in supports 24 of the movable structure 25 means that the housings 3 can easily be replaced in the event of changeover to a container C of a different shape and/or size. According to yet another aspect, the housing seats 3 are each defined by a housing body 49 in which there is an opening 50 adapted to receive the container C. Each housing seat 3 comprises an annular portion 51 which is radially peripheral to the housing body 49. Preferably, the step of removably inserting each housing seat 3 into the opening 53 of a respective support 24 comprises a step of positioning the annular portion 51 of each housing seat 3 against the contact wall 52 of the annular portion 51.

According to yet another aspect, the step of feeding a container C into each of the housing seats 3 comprises the step of capturing an image of the container C, orienting the container C before inserting it into the housing seat 3 and then inserting the container C into the housing seat 3.

## Claims

1. A packaging machine (1) for products (P) of the tobacco industry, comprising:
- a main conveyor (2) provided with a plurality of seats (3) for housing containers (C) for products (P) of the tobacco industry, the main conveyor (2) being configured to move the housing seats (3) along a main, closed conveying path;
- a first feeding station (4) for feeding the containers (C) into the housing seats (3) and located along the main, closed conveying path;
- a feeding and loading station (5) for the products (P) of the tobacco industry, located along the main, closed conveying path and configured to release the products (P) into the containers (C),
the machine (1) being **characterized in that** the main conveyor (2) comprises a movable structure (25) extending along the main, closed conveying path and a plurality of supports (24) fixed to the movable structure (25), the supports (24) comprising an opening (53) adapted to removably receive the seats (3) for housing the containers (C).

2. The packaging machine (1) according to the preceding claim, wherein the housing seats (3) are each defined by a housing body (49) in which there is an opening (50) adapted to receive the container (C).

3. The packaging machine (1) according to the preceding claim, wherein each housing body (49) comprises a surface (54), inside the opening (50), for contacting and supporting the containers (C).

4. The packaging machine (1) according to claim 2 or 3, wherein each housing seat (3) comprises an annular portion (51) radially peripheral to the housing body (49), and each support (24) comprises a wall (52) for contacting the annular portion (51) of the housing seat (3) when the housing seat (3) is being supported by the support (24).

5. The packaging machine (1) according to any one of the preceding claims, wherein the first feeding station (4) for feeding the containers (C) of products (P) comprises a loading robot (19), movable in space to pick up at least one container (C) and insert it into at least one housing seat (3).

6. The packaging machine (1) according to any one of the preceding claims, comprising an image capturing device (23) configured to capture images of the containers (C) and connected to the loading robot (19); the loading robot (19) being configured to orient the container (C) as a function of the images before it is inserted into the housing seat (3).

7. The packaging machine (1) according to any one of the preceding claims, wherein the feeding and loading station (6) for the products (P) comprises:
- a rotary unit (7), provided with a plurality of radial seats (8) for receiving the products (P) and configured to move the radial seats (8) along a respective closed path, a part of which covers an overlap zone (9) with the main, closed conveying path;
- selective opening means (10) for opening a bottom (11) of the radial seats (8) and configured to open the bottom (11) of the radial seats (8) at the overlap zone (9) of the main, closed conveying path to allow the products (P) to be released into the containers (C).

8. The packaging machine (1) according to claim 7, wherein the radial receiving seats (8) are disposed above the main, closed conveying path and have a downwardly tapered shape.

9. The packaging machine (1) according to any one of the preceding claims, further comprising an applicator station (6) for applying lids (CO) to the containers (C), the applicator station (6) for applying lids (CO) being located along the main, closed conveying path downstream of the feeding and loading station (5) for the products (P) in the direction of movement of the housing seats (3).

10. The packaging machine (1) according to any one of the preceding claims, further comprising a releasing station (7) for the packages (CN) which transfers the packages (CN) out of the main, closed conveying path.

11. The packaging machine (1) according to any one of the preceding claims, further comprising a humidifying station (17) for humidifying the products (P) and located along the main, closed conveying path downstream of the feeding and loading station (5) for the products (P) in the direction of movement of the housing seats (3).

12. The packaging machine (1) according to any one of the preceding claims, wherein the first feeding station (4) for feeding the containers (C) of products (P) comprises an automatic loading device (20), adapted to house a plurality of containers (C), located above the main, closed conveying path and configured to release a container (C) into an underlying housing seat (3).

13. A method for packaging products (P) of the tobacco industry, comprising the following steps;
- providing a plurality of housing seats (3) for containers (C) adapted to contain products (P) of the tobacco industry;
- providing a main conveyor (2) which comprises a movable structure (25) extending along the main, closed conveying path and a plurality of supports (24), each provided with a respective opening (53) adapted to removably receive the housing seats (3);
- removably inserting each housing seat (3) into the opening (53) of a respective support (24) so as to couple each housing seat (3) to a support (24);
- moving the housing seats (3), coupled to the supports (24), along the main, closed conveying path;
- feeding a container (C) into each of the housing seats (3);
- releasing at least one product (P) of the tobacco industry into a respective container (C).

14. The method according to the preceding claim, wherein: the housing seats (3) are each defined by a housing body (49) in which there is an opening (50) adapted to receive the container (C); each housing seat (3) comprises an annular portion (51) which is radially peripheral to the housing body (49); the step of removably inserting each housing seat (3) into the opening (53) of a respective support (24) comprises a step of positioning the annular portion (51) of each housing seat (3) against the contact wall (52) of the annular portion (51).

15. The method according to claim 13 or 15, wherein the step of feeding a container (C) into each of the housing seats (3) comprises the step of capturing an image of the container (C), orienting the container (C) prior to its insertion into the housing seat (3) and then inserting the container (C) into the housing seat (3).
